(19) Europäisches Patentamt / European Patent Office / Office européen des brevets

(11) **EP 3 908 438 B1**

(12) **EUROPEAN PATENT SPECIFICATION**

(45) Date of publication and mention
of the grant of the patent:
**21.08.2024   Bulletin 2024/34**

(21) Application number: **20700212.2**

(22) Date of filing: **10.01.2020**

(51) International Patent Classification (IPC):
*B26D 1/28* (2006.01)     *B01J 2/20* (2006.01)
*B29C 48/00* (2019.01)     *B29C 48/345* (2019.01)
*A23L 2/39* (2006.01)      *A23L 2/52* (2006.01)
*A23L 7/143* (2016.01)     *A23L 23/10* (2016.01)
*A23K 40/25* (2016.01)     *A23K 50/42* (2016.01)
*A23P 10/25* (2016.01)     *A23P 30/20* (2016.01)
*B29B 9/06* (2006.01)

(52) Cooperative Patent Classification (CPC):
**B26D 1/28; A23K 40/25; A23K 50/42; A23L 2/39;
A23L 2/52; A23L 7/143; A23L 23/10; A23P 10/25;
A23P 30/20; B01J 2/20; B29C 48/0022;
B29C 48/345;** B29B 9/06

(86) International application number:
**PCT/EP2020/050599**

(87) International publication number:
**WO 2020/144363 (16.07.2020 Gazette 2020/29)**

(54) **EXTRUSION DEVICE AND METHOD COMPRISING A GRANULATING TURBINE, AND FOOD-GRADE GRANULATES SO PRODUCED**

EXTRUSIONSVORRICHTUNG UND -VERFAHREN MIT EINER GRANULIERTURBINE, UND DANACH HERGESTELLTE GRANULATE IN NAHRUNGSMITTELQUALITÄT

DISPOSITIF ET PROCÉDÉ D'EXTRUSION COMPRENANT UNE TURBINE À GRANULATION, ET GRANULÉS DE QUALITÉ ALIMENTAIRE AINSI PRODUITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2019   EP 19151502**

(43) Date of publication of application:
**17.11.2021   Bulletin 2021/46**

(73) Proprietor: **Société des Produits Nestlé S.A.
1800 Vevey (CH)**

(72) Inventors:
• **CHANVRIER, Hélène, Michèle, Jeanne
1350 Orbe (CH)**
• **PELLEGRINI, Stéphane
25160 Montperreux (FR)**
• **PFALLER, Werner
1350 Orbe (CH)**
• **PONCIONI, Patrick
1036 Sullens (CH)**

(74) Representative: **Elleby, Gudrun
Société des Produits Nestlé S.A.
Avenue Nestlé 55
1800 Vevey (CH)**

(56) References cited:
EP-A1- 0 462 887     EP-A1- 3 073 841
EP-A1- 3 079 494     WO-A1-2021/089442
US-A- 3 808 962     US-A- 4 044 159
US-A- 4 728 275     US-B2- 7 524 178

## Description

### TECHNICAL FIELD

The present invention relates generally to the manufacture of food-grade granulates by extrusion using a granulating turbine.

### BACKGROUND OF THE INVENTION

Cereal porridges are a popular breakfast food and have been manufactured for several years. Traditionally, cereal porridges are made from cereal flour or rolled grain, such as oat, corn, rice, wheat or millet flour. The traditional porridges require a comparatively long preparation time, in particular soaking and/or cooking. The food industry proposes dry cereal compositions that may be reconstituted into a porridge. In addition to cereal flakes or pellets, such compositions may include sugars, salts, oils and other flavourings, colouring and preservation agents, vitamins and mineral fortifiers. Reconstitution of such porridges may be performed much faster than traditional porridges, simply by adding milk or water, hot or cold.

Cereal flakes may be manufactured by an extrusion process which combines mixing, cooking, kneading, shearing and forming. Typically, raw materials are fed into an extruder barrel and a screw conveys the raw materials along the barrel. The raw materials undergo heating, compression and mixing to form a thermoplastic mass. The raw materials are then extruded out of the extruder barrel into strands or ropes, which are cut into pellets. The pellets are then dried, they may be flaked with a flaking roller, and toasted. The toasting process sometimes causes a slight expansion of the flakes or a curling of the flakes.

US 7524178 discloses an extrusion device equipped with a cutting head which makes it possible to increase the rate of production of granular products. However, due to its structure, the cutting head it quite sensitive, from an industrial standpoint, to deformation. The cutting head requires regular maintenance, such as balancing to guarantee dynamic equilibrium in operation, and sharpening of the cutting blades. This structure also imposes limits on the rotation speed of the cutting head.

It would therefore be desirable to provide a device that makes it possible to further increases the rate of production of granular products, in particular by removing or reducing the maintenance or dynamic equilibrium issues.

US 3808962 discloses an apparatus for making extruded flakes. The apparatus has a rotating disk-shaped flake-forming and -displacing component with a frusto-conical sectional profile. Several knife blades spiral circularly from a conical outer surface of the component to parting edges of the knife blades. The knife blades are oriented obliquely from the extruder wall. The blades are radially spaced apart, with a flake-passing slot between adjacent blades. In operation, a mass of extruded material accumulates from a discharge port in a void formed between a blade and the extruder wall. The mass is then peeled off by the next blade in the direction of rotation, thereby providing extruded flakes. The oblique orientation of the blades ensures that the extruded material is not bulldozed.

Such an apparatus is particularly useful in making uniformly shaped flakes. It is not suitable for making a granulated product. In addition, the geometry of the flake-forming and -displacing component is very complex and may cause issues for maintenance or dynamic equilibrium.

Alternatively, cereal flakes are made by a roller-drying process which combines preparing a slurry, cooking, drying, and milling. Typically, raw materials are mixed into a container, fed onto the surface of a cooking and drying roller, the cooked sheet is detached from the roller, dried and milled to the desired particle size.

US 4044159 discloses a ready-to-eat extruded cereal product. The only example from this document proposes extruded flakes of about 0.015 inches thickness (about 0.038 mm) which are then conveyed into a mill. This two-step technology is known for the manufacture of milled cereal flakes. Neither the structural properties of the flakes nor their reconstitution properties are disclosed.

EP 3079494 discloses food-grade flakes having a porosity of between 50% and 90%, a mean wall thickness of between 30 and 90 microns, a thickness of between 0.5 and 2 mm, a length of between 2 and 8 mm, a liquid absorption index of between 100 and 600 g liquid/100 g of flakes, and their manufacturing process.

EP 3073841 discloses food-grade flake having a porosity of between 40% and 70%, a mean wall thickness of between 100 and 180 microns, a thickness of between 0.5 and 2 mm, a length of between 2 and 8 mm, a liquid absorption index of between 80 and 200 g liquid/100 g of flakes.

The flakes may still require a few minutes to reconstitute into a porridge. The reconstitution time may be improved by grinding the flakes coarsely. But this means adding a further step to the industrial process, which means a more complex industrial setup.

It would therefore be desirable to provide an equipment and a process for manufacturing a dry cereal composition with even fewer industrial steps, and so that the composition has a very short reconstitution time.

## SUMMARY OF THE INVENTION

The object of the present invention is to improve the state of the art, and in particular to provide an equipment and a process for manufacturing food-grade granulates, and food-grade granulates that overcomes the problems of the prior art and addresses the needs described above, or at least to provide a useful alternative.

The inventors were surprised to see that the object of the present invention could be achieved by the subject matter of the independent claims. The dependent claims further develop the idea of the present invention.

Accordingly, the invention proposes a granulating turbine according to claim 1 suitable for cooperating with a device for manufacturing a granular food product, said device comprising an extruder having a least one extrusion die comprising an extrusion face in which a plurality of extrusion orifices open, and in which device the granulating turbine may be driven in rotation about an axis perpendicular to the extrusion face, said granulating turbine being characterised in that it has a front face facing the extrusion face, a plurality of fins integral with and extending perpendicularly from the front face, each fin having a lead face, a trail face and a clearance face, the clearance face facing the extrusion face and the lead face intersecting the clearance face at a cutting edge.

The invention further proposes a device according to claim 8 for manufacturing a granular food product, said device comprising an extruder having a least one extrusion die comprising an extrusion face in which a plurality of extrusion orifices open and a granulating turbine according to the first aspect of the invention, wherein the granulating turbine may be driven rotationally about an axis perpendicular to the extrusion face such that, when driven rotationally, the fins pass about the extrusion orifices.

The invention further poses a process according to claim 9 for manufacturing food-grade granulates where the process comprises:

- mixing a starchy material in an extruder to form a dough;
- cooking the dough in the extruder at a temperature comprised between 110°C and 160°C and at a water content comprised between 10% and 30%;
- extruding the dough through an extrusion die;
- cutting the dough into granulates directly at the outlet of the extrusion die, at a turbine cutting speed Vtur of between 20 m/s and 120 m/s and at an extrudate length Lpr of between 0.05 mm and 0.5 mm with a rotationally-driven granulating turbine as claimed; and

drying the granulates to a water content below 8% said food-grade granulates have an average area diameter of between 500 and 4000 $\mu$m, a porosity of between 40% and 90%, a mean wall thickness of between 10 and 50 $\mu$m and a reconstitution time of 0.1 to 1.4 minutes.

The invention also proposes, according to claim 11, food-grade granulates obtained by the claimed process, wherein the granulates comprise at least 50% by weight of starch from a starch-based material, and wherein the granulates have a water content below 8%, characterized in that the granulates have an average area diameter of between 500 and 4000 um, a porosity of between 40% and 90%, a mean wall thickness of between 10 and 50 um, and a reconstitution time of 0.1 to 1.4 minutes. These and other aspects, features and advantages of the invention will become more apparent to those skilled in the art from the detailed description of embodiments of the invention, in connection with the attached drawings.

## BRIEF DESCRIPTION OF THE DRAWINGS

Figure 1 is a simplified part view in cross section of an extruder equipped with a cutting head, as described in US 7524178.
Figure 2 is a perspective view of a granulating head according to the invention in front of the extrusion face of an extrusion die.
Figure 3 is a perspective view of a granulating head according to the invention, viewed from the front.
Figure 4 is a front view of the granulating head of Figure 3.
Figure 5 is a partial perspective view in cross-section of a granulating head according to the invention in front of an extrusion die.
Figure 6 is a partial perspective view of an embodiment of a fin.
Figure 7 is schematic cross-section view of a fin in front of an extrusion hole with extruded mass.
Figure 8 is a schematic view of a granulating turbine according to the invention in operation.
Figure 9 depicts milled pellets of example 1. Figure 9A is a light microscopy observation of milled pellets. Scale: the white bar is 1000 $\mu$m. Figure 9B is an X-ray tomography image of the milled pellets. Scale: 10 x 10 mm.

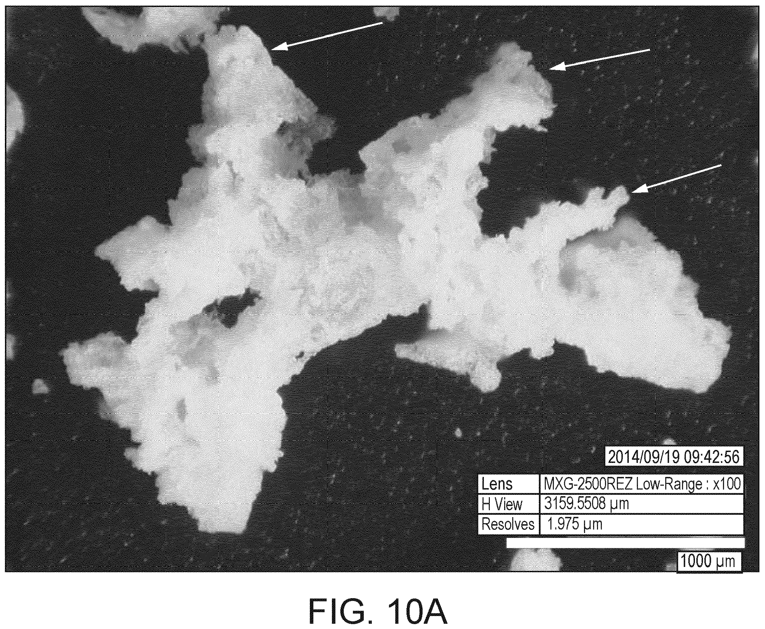

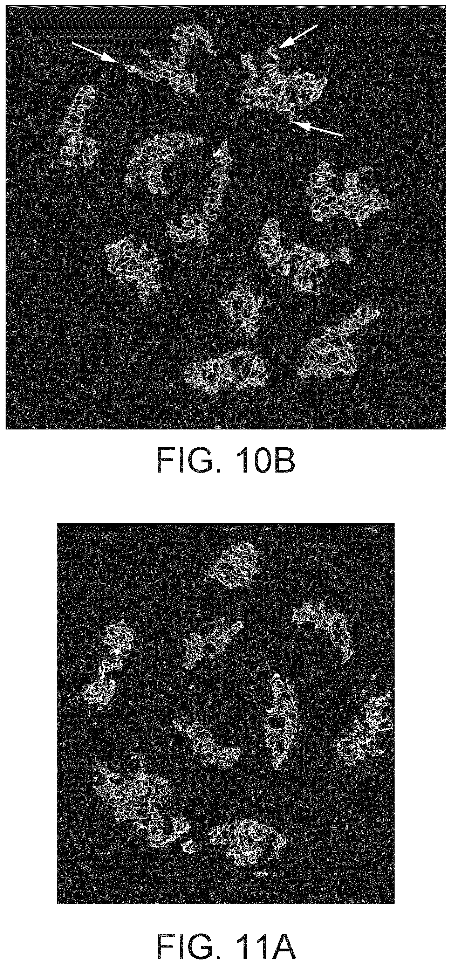

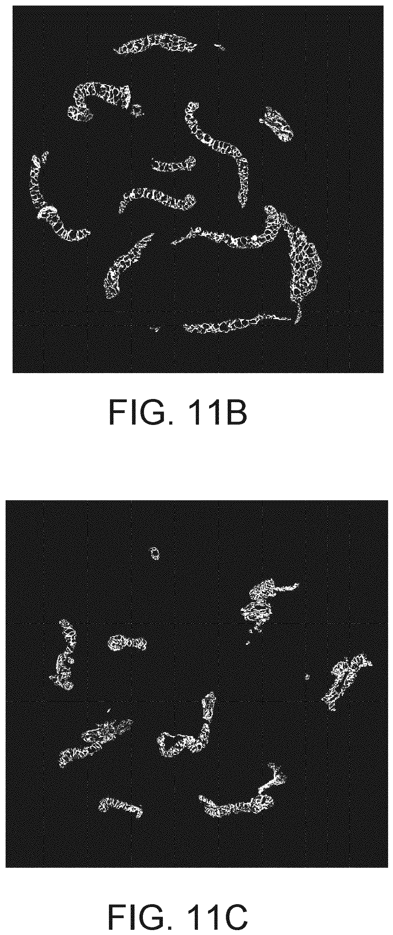

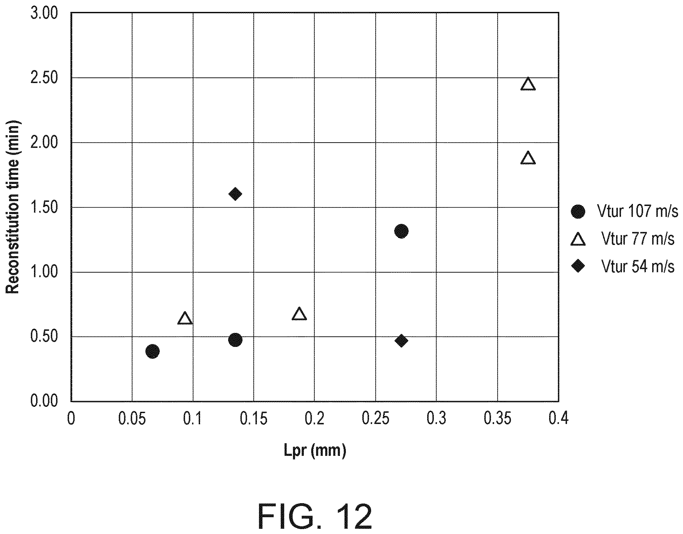

Figure 10 depicts direct granulates of example 2. Figure 10A is a light microscopy observation of direct granulates. Scale: the white bar is 1000 $\mu$m. Figure 10B is an X-ray tomography image of the direct granulates. Scale: 10 x 10 mm. Figure 11 are X-ray tomography images of direct granulates that can be obtained when decreasing Lpr from 0.38mm (11A), to 0.187 mm (11B), to 0.093 mm (11C) for a fixed Vtur of 77.6 m.s$^{-1}$. See example 2. Scale: 10 x 10 mm Figure 12 is a diagram showing how reconstitution time is modified when changing Lpr and Vtur (diamonds Vtur = 54 m/s, triangle Vtur = 77 m/s, circles Vtur = 107 m/s).

## DETAILED DESCRIPTION OF THE INVENTION

As used in the specification, the words "comprise", "comprising" and the like are to be construed in an inclusive sense, that is to say, in the sense of "including, but not limited to", and do not exclude additional, unrecited elements or method steps. As used in the specification, the words "consist of", "consisting of" and the like are to be construed in an exclusive or exhaustive sense: they exclude any unrecited elements or method steps. As used in the specification, the words "consists essentially of", "consisting essentially of" and the like are to be construed in the sense that further elements or method steps may be present provided they do not materially affect the essential characteristics of the invention.

As used in the specification, the singular forms "a", "an", and "the" include plural referents unless the context clearly dictates otherwise.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

### Extruder and granulating turbine

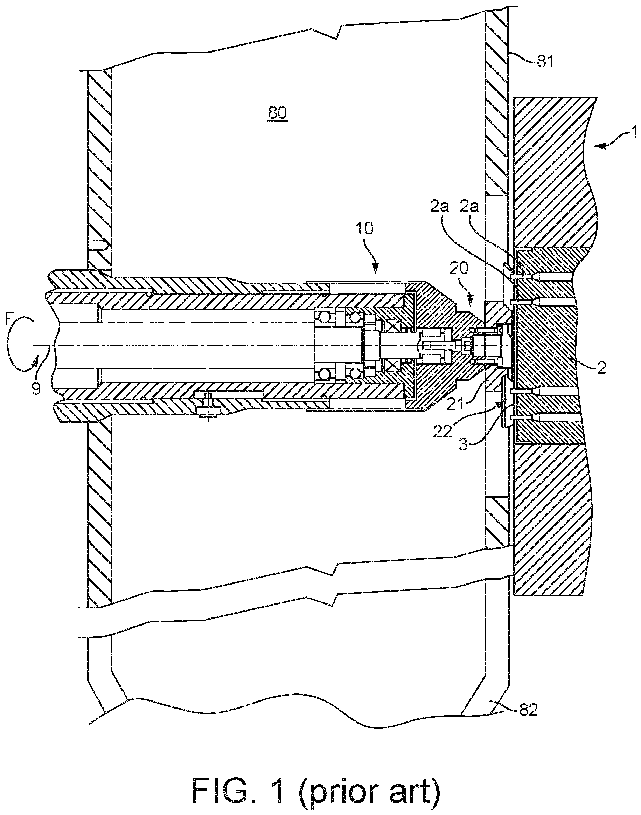

With reference to Figure 1, which shows a simplified part view in cross section of a prior-art extruder, an extruder 1 of a known type comprises, at its exit, at least one extrusion die 2 the orifices 2a of which are distributed in two circles in this example, and open onto a flat surface 3 known as the extrusion face. Facing this surface 3 there is a rotary cutting head 20 provided with cutters 22 arranged in such a way as to cut the ropes of extruded substance leaving the die 2. The cutters 22 are mounted on a support 21.

The cutting head 20 lies inside an evacuation chamber 80 which may be designed to be kept at a sub-atmospheric pressure by virtue of a vacuum pump (not depicted). The enclosure of this chamber is depicted schematically by a peripheral wall 81 and a lower hopper 82 into which the granular products manufactured by the device described here drop and are collected by means of an extractor allowing the vacuum in the chamber 80 to be maintained, if required. The seal between the extruder 1 and the wall 81 is afforded by means which have not been depicted.

The cutting head 20 rotates, in the direction of the arrow F, about an axis 9 perpendicular to the face 3 of the extruder. It is mounted on the end of a shaft 10 the other end of which is coupled to the shaft of an electric motor (not depicted).

In operation, the motor turns the shaft 10 and the cutting head 20 at an adjustable speed which may for example range up to 5000 revolutions per minute ("rpm"). The pasty product extruded in the hot state by the extruder 1 forms, as it leaves each orifice 2a of the die 2, a rope which is immediately cut by the cutters 22 into pieces. As the extruded product contains water vapour and possibly other gases, the pieces swell in the evacuation chamber 80 and solidify in the form of grains which drop into the hopper 82. The size, shape and rate of manufacture of the pieces can be adjusted by, for example, adjusting the speed of the extruder 1, the speed of the motor, or the pressure in the chamber 80.

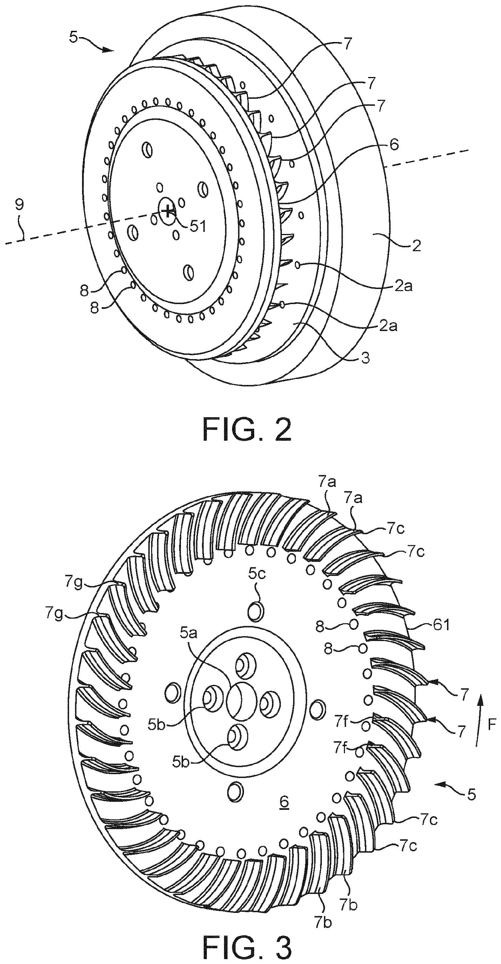

According to an aspect of the invention, the cutting head 20 shown in Figure 1 is replaced with a granulating turbine 5, as shown in Figures 2 to 6, which results in a device for manufacturing a granular food product by extrusion and granulating. The device comprises an extruder. Extruders are conventional equipment in the food and feed industry. The extruder may be a single-screw or a twin-screw extruder. The extruder has a least one extrusion die 2 comprising an extrusion face 3 in which a plurality of extrusion orifices 2a open and a granulating turbine 5 positioned facing the extrusion face. The granulating turbine will be described in more details below. The granulating turbine 5 may be driven rotationally about an axis 9 perpendicular to the extrusion face 3 such that, when driven rotationally, the fins 7 pass about, or over, the extrusion orifices 2a. The trajectory of the fins 7 overlaps the extrusion orifices 2a.

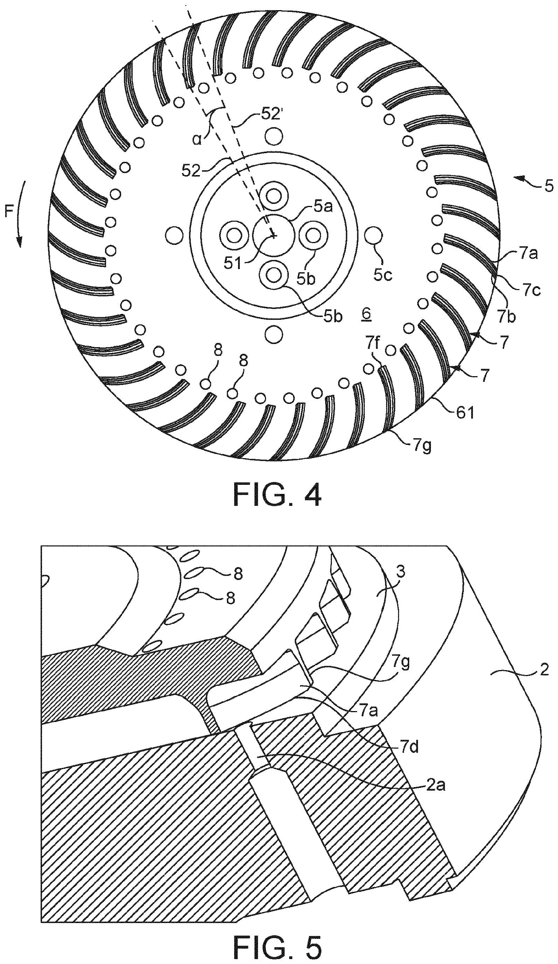

Figures 3 and 4 show an embodiment of a granulating turbine 5. The granulating turbine 5 has a front face 6 and a plurality of fins 7 integral with and extending perpendicularly from the front face 6. Each fin 7 has a lead face 7a, a trail face 7b and a clearance face 7c. The clearance face 7c is parallel to the front face 6. When installed at the outlet of the extruder, the front face 6 faces the extrusion face 3. The front face 6 of the granulating turbine 5, the extrusion face 3 of the extrusion die 2 and the clearance faces 7c of the fins 7 are parallel. The lead face 7a intersects the clearance face 7c at a cutting edge 7d. The trail face 7b intersects the clearance face 7c at a trail edge 7e.

The fins 7 are not welded, screwed or otherwise attached to the front face 6 of the turbine 5. For instance, the turbine 5 is manufactured from a single piece of metal. In addition, the fins 7 extend from the front face 6, which provides more structural rigidity to the granulating turbine 5, when compared with a cutting head 20 shown on Figure 1 or when compared with a cutting head where the blades are at an oblique angle with the extrusion face 3 of the die 2. Hence, the mechanical structure of the cutting head is rather simple and may be carved out of a single piece of metal.

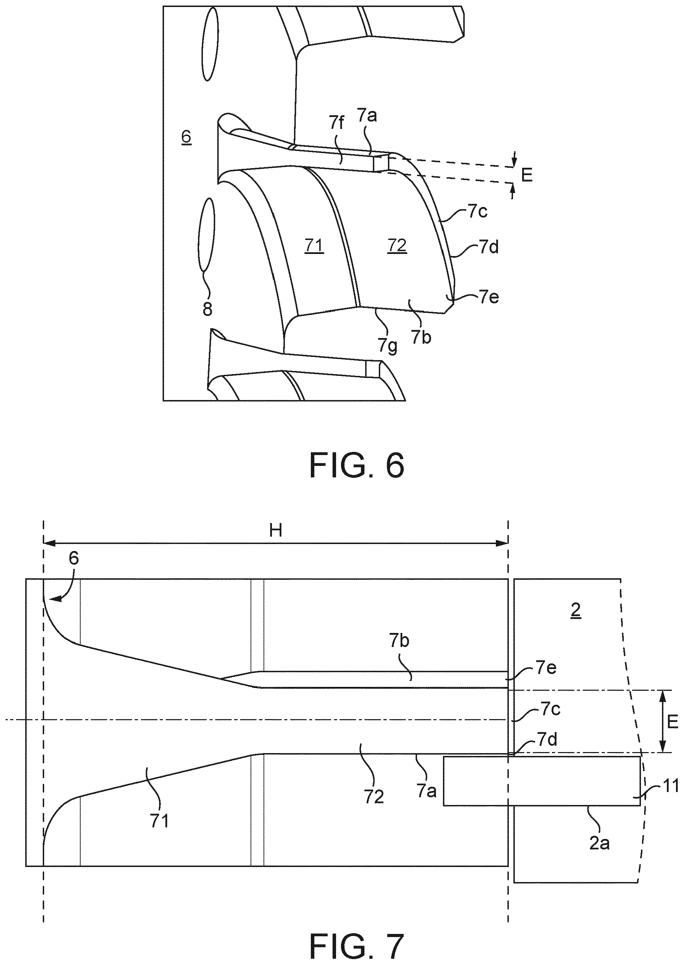

As shown on Figures 6 and 7, each fin 7 has a cross-sectional profile. Starting from the front face 6, along the height H of a fin 7, the cross-sectional profile has a base 71 and a tip 72. The base 71 tapers down from the front face 6 of the granulating turbine 5 to about 1/3 to 2/3 of its height H, and the tip 72 has a substantially constant thickness E and extending from the top of the base 71 to the clearance face 7c. The fins 7 extend substantially perpendicularly from the front face 6 of the cutting head. By "substantially perpendicularly", it is meant that, when looking at a cross-section of the fin, as in Figure 7, the height H of the fin is at a right angle from the plane of the front face 6.

Preferably all the fins 7 have substantially the same height H, although fins having different heights could also be envisaged. When all the fins 7 have the same height, homogeneous food-grade granulates may be obtained. When fins 7 have different heights, the structure and size of the resulting food-grade granulates will be heterogeneous, which may also be interesting considering that the structure and the size of the food-grade granulates have an impact on the reconstitution and mouthfeel of the product. If the fins 7 have different heights among each other, they should be distributed on the granulating turbine 5 in a manner to balance centrifugal forces when the granulating turbine 5 is in operation.

In operation, as the fins 7 extend substantially perpendicularly, or at a right angle, from the front face 6, the fins hit the extruded material with maximum kinetic energy. Thus, the extruded material is well pulverised.

As shown on Figures 3 and 4, the fins 7 have a front-view profile extending between an inner face 7f and an outer face 7g. The inner face 7f is closer to the rotation centre 51 of the granulating turbine 5 than the outer face 7g. As shown in the Figures, the outer face 7g is radially offset from the inner face 7f by an angle $\alpha$. For instance on Figure 4, a radius 52 is shown between the rotation centre 51 and the inner face 7f of a fin 7, and a radius 52' is shown between the rotation centre 51 and the outer face 7g of the same fin 7, to exhibit the radial offset $\alpha$ between the inner face 7f and the outer face 7g.

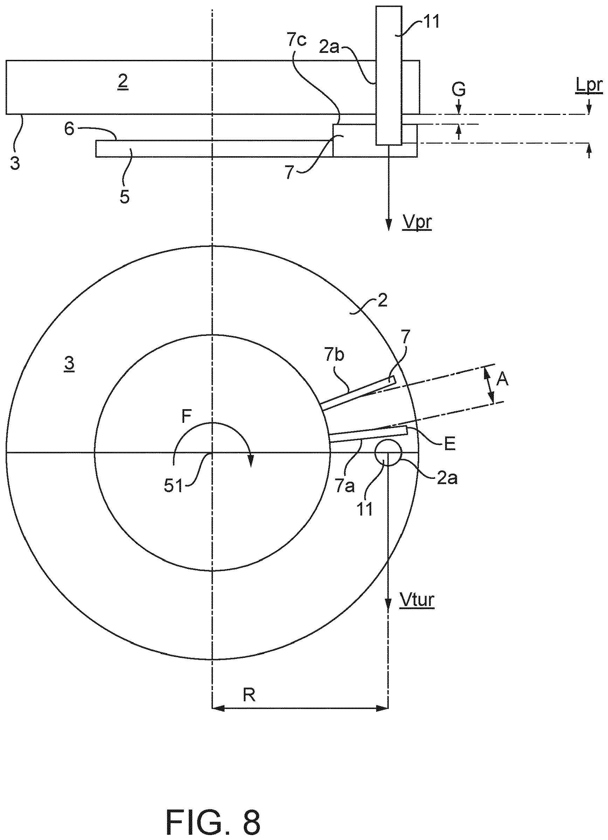

Alternatively, the outer face 7g of a fin 7 may be radially aligned with the inner face 7f as shown for instance at the bottom of Figure 8.

The front-view profile of a fin 7 may be straight, between the inner face 7f and the outer face 7g, or curved, for instance an arc of a circle. A curved front-view profile is not, for instance, wavy. Preferably, the front-view profile of the fins 7 extends along an involute of a circle between the inner face 7f and the outer face 7g. Such a profile improves ejection of the granulates from the granulating turbine 5. Preferably, the height H of the fins 7 is constant along the front-view profile.

In a preferred embodiment, the fins 7 are arranged on a periphery of the front face 6, for instance in a peripheral row. As shown on Figure 4, the inner 7f faces of the fins 7 are arranged on an inner circle of the front face 6, and the outer 7g faces of the fins 7 are arranged on an outer circle of the front face 6. The inner circle and the outer circle are concentric. Preferably, the outer circle is proximate to the periphery 61 of the front face 6 of the granulating turbine 5. Preferably, the fins 7 are evenly distributed on a periphery of the front face 6.

In an embodiment, the granulating turbine 5 further comprises through holes 8. The through holes 8 are arranged between the rotation centre 51 of the granulating turbine 5 and the fins 7, preferably between two consecutive fins 7. The through holes may be arranged on a circle of the front face 6, preferably they are evenly distributed. Preferably, there are as many through holes 8 as there are fins 7. The through holes 8 allow air to flow from the back of the granulating turbine 5 to the front face 6. This improves ejection of the granulates from the granulating turbine 5.

In an embodiment, the granulating turbine comprises one peripheral row of fins 7. For instance, the row comprises from 9 to 40 fins, for instance the row comprises 9, 12, 15, 18, 20, 24, 30, 36 or 40 fins.

The granulating turbine 5 also has a through hole 5a at the centre of the front face 6 and through holes 5b arranged proximate to the centre of the front face 6 which cooperate with a standard mechanical connection (not shown) with the shaft 10 (shown on Figure 1).

A granulating turbine 5 may be removed easily for maintenance or to replace it with another model of granulating turbine 5. In an embodiment, the granulating turbine 5 also has maintenance through holes 5c which may cooperate with a protection tool (not shown). The protection tool comprises a plate having the same diameter as the front face 6. The back of the plate is equipped with two handles. The front of the plate faces the front face 6. The protection tool may be attached to the granulating turbine 5 in cooperation with the maintenance holes 5c, which protects the fins 7 and the front face 6 from damage. It also protects users from the potentially sharp edges 7d,7e of the fins 7.

**Food-grade granulate, food composition and manufacturing method**

The granulating turbine opens the possibility to manufacture food-grade granulates, for instance cereal granulates, directly from an extruder, without the need for a downstream milling. The food-grade granulates are not flakes or pellets. They are closer to a powder than to flakes or pellets, which makes it easier to handle in an industrial setting, in operations such as pumping, conveying, dosing, or mixing. Contrary to flakes or pellets, it is not necessary to mill the food-grade granulates to improve their reconstitution properties. Also, the food-grade granulates are easy to use for consumers and they provide textures which were not previously available when using flakes or pellets, with a short reconstitution time. It is also possible to better adapt the nutritional properties of the granulates, for instance by increasing the fibre content or reducing the sugar content.

As used herein, "cereal granulate" refers to a carbohydrate-based product having a porous structure and a delicate crisp texture due to the cutting and drying of the granulate. It is understood that the apparatuses and methods of the present disclosure can also be used to produce similar foods from a direct extrusion process, such as other carbohydrate-based edible products. Although the present disclosure is described by referring to cereal granulates, the present disclosure is not intended to be limited to cereal granulates. For example, the granulates do not have to be used for a cereal product but can be used for other food products. "Pellets" refers to extruded balls. "Milled pellets" refers to pellets that are granulated by a downstream processing of milling. "Direct granulates" refers to extruded products that are cut directly as they exit an extruder, as discussed below, meaning that the granulates are produced in a single operation without downstream processing such as milling. "Reconstitution" refers to the addition of a liquid to cereal granulates. "Reconstitutable" refers to the time when the maximum water absorption is reached by a cereal granulate. "Porridge" refers to the product obtained after the addition of liquid to the granulates. No free liquid is left after reconstitution. For instance, a porridge is a hydrated cereal mass after reconstitution. The texture of the porridge varies depending on the cereal granulates and can go from smooth to heterogeneous or semolina/grainy or flaky. "Porosity" refers to the ratio of the volume of empty spaces (cells) versus the full volume of a product, as explained in the Methods section. "Mean wall thickness" refers to the average thickness of the pores of the pellets, milled pellets and/or direct granulates as measured using x-ray tomography, and as explained in the Methods section. Reconstitution time" refers to the time needed to reach the maximum viscosity of the cereal granulates once in presence of liquid, and as explained in the Methods section.

In an aspect, the invention proposes food-grade granulates having an average area diameter of between 500 and 4000 $\mu$m, a porosity of between 40% and 90%, a mean wall thickness of between 10 and 50 $\mu$m and a reconstitution time of 0.1 to 5 minutes. The average area diameter, the porosity, the mean wall thickness and the reconstitution time are defined in the Methods section below. The food-grade granulates are a dry particulate product. Preferably, the porosity of the granulates ranges from 50% to 80%. Preferably, the porosity of the granulates ranges from 50% to 80%. Preferably, the mean wall thickness of the granulates ranges from 20 to 50 $\mu$m. In this field

Preferably, the granulates comprises at least 50% by weight of starch from a starch-based material, such as cereals. For instance, the cereal includes maize, oat, rice, barley, rye, wheat, sorghum, millet, buckwheat, amaranth, and mixtures thereof. The cereals may be supplied as flour, semolina or in other standard forms.

Preferably, the cereal-based granulates comprise at least 50% dry weight, preferably at least 60% dry weight, more preferably at least 70% dry weight of cereals. Of this cereal content, at least 30% dry weight may be wholegrain cereal. In an embodiment, the cereal-based granulates comprise at least 50% dry weight of whole grain cereal, such as a mixture of whole wheat, corn and/or millet grain.

The granulates may comprise further ingredients selected from sugars, sweeteners, flavours, fruit powders, brans, fibres, gums, milk powders, vitamins, minerals, cocoa powder and any mixture thereof. If sugars are used, preferably, the added sugar is sucrose.

Fruit, vegetable and legumes may be interesting ingredients to provide colour, or flavour to the oat-based pieces. In addition, fruits, vegetables and legumes contain interesting dietary fibres, macronutrients, such as proteins, or phytonutrients, such a polyphenols. Preferably, fruit, vegetables and legumes are provided as dry powders or flours. For instance, the dry mix comprises from 5 to 30 wt% of fruit and/or vegetable powder.

Examples of fruits include apple, blackberry, cherry, date, grape, orange, passion fruit, pear, peach, pineapple, plum, raspberry, and strawberry. Examples of vegetables include artichoke, broccoli, carrot, cassava, cauliflower, courgette, pumpkin, spinach, sweet potato, or tomato. Examples of legumes include beans, chick peas, kidney beans, lentils, or peas. Combinations of several fruits, vegetables and/or legumes can be considered. Some of the fruits or vegetable ingredients may also contain starches.

Milk powder can be added into the dry mix. Milk powder is useful to improve the protein content of the oat-based pieces. Examples of milk powders include powder made from milk, semi-skim milk, skim milk, milk proteins and combinations thereof. Examples of milk proteins are casein, caseinate, casein hydrolysate, whey, whey hydrolysate, whey concentrate, whey isolate, milk protein concentrate, milk protein isolate, and combinations thereof. Furthermore, the milk protein may be, for example, sweet whey, acid whey, $\alpha$-lactalbumin, $\beta$-lactoglobulin, bovine serum albumin, acid casein, caseinates, $\alpha$-casein, $\beta$-casein and/or $\gamma$-casein. For instance, the dry mix comprises from 5 to 40 wt% of milk powder.

Sweeteners include natural sweeteners and sugar substitutes. Examples of natural sweeteners include agave nectar, date sugar, fruit juice concentrate, honey, maple syrup, molasses. Examples of sugar substitutes include acesulfame potassium, aspartame, neotame, saccharin, sucralose, advantame, erythitol, hydrogenated starch hydrolysate, isomalt, lactitol, maltitol, mannitol, sorbitol, xylitol, stevia extracts, tagatose, trehalose. Preferably, artificial sweeteners are avoided. For instance, the dry mix comprises up to 15 wt% of sweetener. For instance, the dry mix comprises from 3 to 15 wt% of sugar or other natural sweeteners, or an amount of sugar substitutes sufficient to provide an sweetness perception equivalent to 3 to 15 wt% of sugar. In any case, the amount of natural sweeteners and sugar substitutes should respect the applicable regulation.

The granulates may also comprise soluble or insoluble fibres. Preferably, fibres include beta-glucan, inulin and fructo-oligosaccharides. Fibres may be provided in the form of cereal bran for instance.

In addition, the granulates may also comprise vitamins, minerals and other nutrients including vitamin A, vitamin B1, vitamin B2, vitamin E, vitamin K, vitamin C, vitamin D, folic acid, inositol, niacin, biotin, pantothenic acid, choline, calcium, sodium, phosphorous, iodine, magnesium, copper, zinc, iron, manganese, chloride, potassium, selenium, chromium, molybdenum, taurine and L-carnitine. Minerals are usually in salt form. The presence and amount of the specific minerals and other vitamins may vary depending on the intended fortification and the targeted consumer. In any case, fortification levels should respect the applicable regulation. Fortification could be added in the dry mix prior to extrusion or directly into the extruder. Usually, the vitamins, minerals and other nutrients represent less than 2 wt% of the dry mix.

In an embodiment, the granulates further comprises up to 1 wt% of calcium carbonate. Addition of calcium carbonate improves the expansion properties of the dough. For example, the dry mix comprises 0.5 wt%, or 0.6 wt%, or 0.7 wt%, or 0.8 wt% or 0.9 wt% of calcium carbonate.

The food-grade granulates is obtainable by a cooking-extrusion process, preferably a process that does not comprise a milling step downstream of the cutting step. The process for manufacturing the food-grade granulates comprises several steps: a) feeding a dry mix into a cooker-extruder, b) adding water into the cooker-extruder to obtain a dough, c) cooking the dough, d) extruding the dough, e) granulating the dough into pieces and expanding the pieces, and f) drying the pieces.

An aspect of the invention proposes a process for manufacturing food-grade granulates. The process comprises:

- mixing a starchy material in an extruder to form a dough;
- cooking the dough in the extruder at a temperature comprised between 110°C and 160°C and at a water content comprised between 10% and 30%;
- extruding the dough through an extrusion die;
- cutting the dough into granulates directly at the outlet of the extrusion die 2, at a turbine cutting speed Vtur of between 20 m/s and 120 m/s and at an extrudate length Lpr of between 0.05 mm and 0.5 mm with a rotationally-driven granulating turbine 5 as described above, and
- drying the granulates to a water content below 8%.

The parameters used to compute Lpr and Vtur are illustrated on Figure 8. The bottom of the Figure 8 shows a schematic view of the extrusion face 3 of the die 2 superposed with a schematic view taken between the front face 6 of the turbine 5 and the fins 7.

The speed of the fins 7 when they impact the extruded product 11, or turbine cuttings speed Vtur is given by the following equation:

$$Vtur = \frac{2\,\pi \times RPM \times R}{60 \times 1000}$$

where

- R is the radius between the rotation centre 51 and the position of the extrusion holes 2a
- RPM is the radial rotation speed of the granulating turbine 5

The length Lpr of the extrudate before expansion may be estimated as follows:

$$Lpr = (Vpr \times 1000)/(RPM/60)/NF$$

where

- G is the clearance between the extrusion face 3 and the clearance face 7c of the fins 7
- Vpr is the speed of extrusion of the melt 11 at the extrusion hole 2a

- NF is the number of fins of the granulating turbine 5, which may be estimated as:

$$NF = 2\pi \times \frac{R}{A + E}$$

where:

- E is the thickness of the fins 7
- A is the distance between the lead face of a fin and the trail face of the next fin, in the direction of rotation, at the position of the extrusion hole 2a

In an embodiment, granulating may be performed under sub-atmospheric pressure, for instance at a pressure of 20 mbar.

For instance, a dry or moist starchy material mix is fed into an extruder, or cooked-extruder. The ingredient mix typically includes 50-99% cereal flour, 0-50% sugar and water. The cooker-extruder usually comprises several successive barrels equipped with a screw (single or twin). The dry mix is typically fed into the first barrel. After feeding the dry mix into the first barrel, the ingredient mix may be further mixed in a first mixing section of the extruder, to obtain a dough. Water is added by injection in the first or the second barrel, to reach a water content comprised between 10% and 30%. The dough is heated and cooked at a temperature between 110°C and 160°C, compressed and sheared so that it forms a cooked thermoplastic mass, sometimes referred to as a melt 11. Under these conditions, the material melts due to the combination of mechanical friction between the screw and the thermal energy given through the barrel. The melt 11 is then conveyed to the extrusion die 2 where it is subjected to pressure.

The thermoplastic mass may be extruded by having it pushed by an extruder screw or twin screw through the extrusion holes 2a of the extrusion die 2. As the thermoplastic mass is forced through the narrow die, it can be followed by a sudden release of pressure that leads to a rapid evaporation of steam. Preferably, the diameter of the extrusion holes 2a of the extrusion die 2 is lower than 4 mm, preferably comprised between 2 mm and 4 mm.

As the dough exits the extruder through the extrusion die, the mass is cut into granulates by the granulating turbine 5 driven rotationally.

The inventors have found that the granulating turbine 5 may be driven clockwise or counter-clockwise, and that it applies whether the fins 7 are straight (radially or offset) or curved. When the front-view profile of the fins 7 is curved, such as an involute of a circle, ejection of the granulates is improved when the granulating turbine 5 is driven counter-clockwise, as shown on Figure 4 for instance, with the offset $\alpha$ between the inner face 7f and the outer face 7g is a clockwise offset.

The thermoplastic mass 11, or dough, is granulated at a length Lpr and speed Vtur that depends on the rotation speed of the granulating turbine 5 and on its structure.

The granulating turbine 5 and extrusion die 2 are positioned within a chamber 80. As the granulating turbine 5 rotates and cuts the granulates directly off the die, the granulates fall down the chamber 80 into a hopper 82 for collection.

The granulates may then be dried. The drying step can be carried out using an infrared (IR) heater or by hot-air drying. Typically, the product is placed on a mesh wire belt which goes through an IR drying machine, such that IR radiations occur from above and below the product. The drying step typically reduces the water content of the product from about 15% to a moisture content of about 1 to 6.5%. Typically, the final granulates are dried to a final residual water content of from 2% to 8%.

A dry food composition which comprises food-grade granulates as described herein. In an embodiment, the dry food composition consists of food-grade granulates as described herein. For instance, the dry food composition may be an infant cereal product, an adult cereal product, a dehydrated sauce, a dehydrated soup, a dehydrated dish, a reconstitutable beverage, or a dehydrated pet food. For instance, the dry food composition is ready for reconstitution into a porridge, simply by mixing a liquid with it. The liquid may be water or milk. It could also be a fruit juice. The liquid may be cold, for instance at a temperature between 3°C and 10°C, or warm, for instance at a temperature between 30°C and 80°C.

Further advantages and features of the present invention are apparent from the figures and examples,

**METHODS**

**1. Determination of the internal structure of granulates by microcomputed X-ray tomography and 3D image analysis**

*1.1. Images acquisition of granulates*

X-ray tomography scans are performed with a 1272 Skyscan MCT (Brüker MicroCT, Kontich, Belgium) with a X-ray beam of 40kV and 100μA. Scans are performed with the Skyscan software (version 1.1.9), reconstruction with the Skyscan NRecon software (version 1.6.10.4) with the InstaRecon program (version 2.03.5) and 3D image analysis with CTAn software (version 1.17.7.2, 64-bit).

Each granulate was placed in the X-ray tomography chamber. The image pixel size was 5um, the source voltage was 50kV and the source current was 200uA and the camera had an exposure time of 257 ms. Scans were performed over 180º, with an angular step of 0.2° and a frame averaging of 3.

The reconstruction of the dataset was performed over 900 slices in average, with the settings contrast at 0.008-0.15. Smoothing and ring artefact reduction were set up at 1 and 10, respectively.

*1.2. 3D analysis of the images*

3D image analysis was performed on 10 μm per pixel reduced datasets over 450 slices. The analysis was performed in two steps: (i) a first step to select the granulates to be analysed by excluding the outer area surrounding the granulates, (ii) the second step to obtain the porosity of the granulates.

*(i) Selection of the particles, i.e. volume of interest:*

The images in grey levels were segmented. The segmentation was performed at a grey level of 40, and then images were cleaned by removing any single spots smaller than 2 pixels, and then dilated by mathematical morphology. The selection of the volume of interest was performed through the shrink-wrap function, and then this volume was eroded by mathematical morphology to adjust to the surface of the granulates. Dilation and erosion parameters were chosen in order to obtain the best adjustment to the surface of the particles.

*(ii) 3D image analysis:*

The images were reloaded and segmented at a grey level of4. The porosity was then calculated as the ratio of the volume of voids in the granulates out of the granulates volume, the granulates volume being equal to the volume of interest defined above (i). The structure thickness gave the thickness of walls distribution.

**2. Reconstitution behavior assessed by RVA (Rapid Visco Analyzer)**

The reconstitution behavior of the granulates was assessed with the RVA (Rapid Visco Analyzer, RVA 4500, Newport Scientific) by putting 6.25g of granulates in the RVA canister and adding 25mL of milk (with 2.5% fat) heated at 65°C. The granulates and milk mix was then stirred manually for 10s in order to put the granulates and milk in contact, then stirred in the RVA canister with the paddles at 50 RPM for 10min at 65°C.

From the curves viscosity versus time obtained with the RVA, the maximal viscosity of the rehydrated granulates was obtained and the time to reach this maximal viscosity (in minutes) was extracted. The "reconstitution time" is the time to reach maximal viscosity.

**3. Determination of the particles size of the granulates**

The particles size of the granulates was determined with the Zephyr instrument (Occhio). In this method, the granulates gently fall vertically in front of a high resolution camera: Each particles are detected by the camera. Then they are analysed by an image analysis software (Callisto). A representative volume of particles is analysed and represents usually from 20'000 to 50'000 particles.

From the particles size distribution curve, the average area diameter is obtained (D[4,3]). The area diameter corresponds to the diameter of the equivalent sphere, having the surface of the particle.

## EXAMPLES

Two types of well-known twin-screw extruders are used in the examples, namely models BC 21 and BC 45, both from CLEXTRAL (France).

### Example 1: Comparative example - Milled pellets

Milled pellets may be prepared using the recipe and conditions A or B, with the extrusion and cutting parameters described in the Table 1.1. Minerals are calcium carbonate and/or potassium phosphate.

**Table 1.1**

| Example | | A | B |
|---|---|---|---|
| **RECIPE** | Unit | **Milled pellets** | **Milled pellets** |
| Whole wheat flour | % wt | 70 | 77 |
| Oat flour | % wt | 17.45 | 11.5 |
| Amaranth flour | % wt | 0 | 10.3 |
| Whole millet flour | % wt | 5 | 0 |
| Sugar | % wt | 7 | 0 |
| Tocopherol | % wt | 0.05 | 0.03 |
| Minerals* | % wt | 0.5 | 1.17 |
| **EXTRUSION** | | | |
| Extruder type | | BC 21 | BC 45 |
| Product temperature | °C | 145 | 140 |
| Screw speed | RPM | 400 | 400 |
| Water in the extruder | % | 21.7 | 22% |
| **CUTTING with prior art cutter (Fig 1)** | | | |
| Number of die | | 1 | 16 |
| Die diameter | mm | 2 | 2 |
| Total flow rate | Kg/h | 10 | 120 |
| Flow rate per die | Kg/h | 10 | 7.5 |
| Granulator speed | RPM | 2700 | 4000 |
| Number of blades | | 9 | 6 |
| Vpr | m.s$^{-1}$ | 16.1 | 23.9 |
| Lpr | mm | 1.8 | 1.14 |
| **FIGURE** | | | **9** |

The extruded product is milled into granulates. Granulates of this example were obtained by extruding a cereal composition into pellets with a traditional extrusion granulator with 6 or 9 blades at traditional cutting speed (2700 or 4000 RPM), followed by a downstream milling. The milling was performed with a Frewitt mill with a square mesh size of 1.5 mm, wire of 1 mm and a rotation speed of 0.74 RPM in order to reach the same range of granulates size as the granulates according to the invention.

Average area diameter, reconstitution time were measured as explained in the method section. As shown in table 1.2, before milling, the pellets had a porosity from about 70 to 76% and a mean walls thickness from 45 to 74 microns. The mean walls thickness of the millets pellets is equivalent to the mean walls thickness of the initial pellets. The milled pellets had an average area diameter from about 1000 to 1800 microns. The reconstitution time reached a minimum of 3.4 minutes.

**Table 1.2**

| Example | Unit | A | B |
|---|---|---|---|
| Average area diameter | μm | 1053 | 1710 |
| Reconstitution time | min | 3.44 | 6.19 |
| Pellet structure before milling | | | |
| Porosity | % | 75.1 | 70.3 |
| Mean walls thickness | μm | 73.3 | 45.4 |

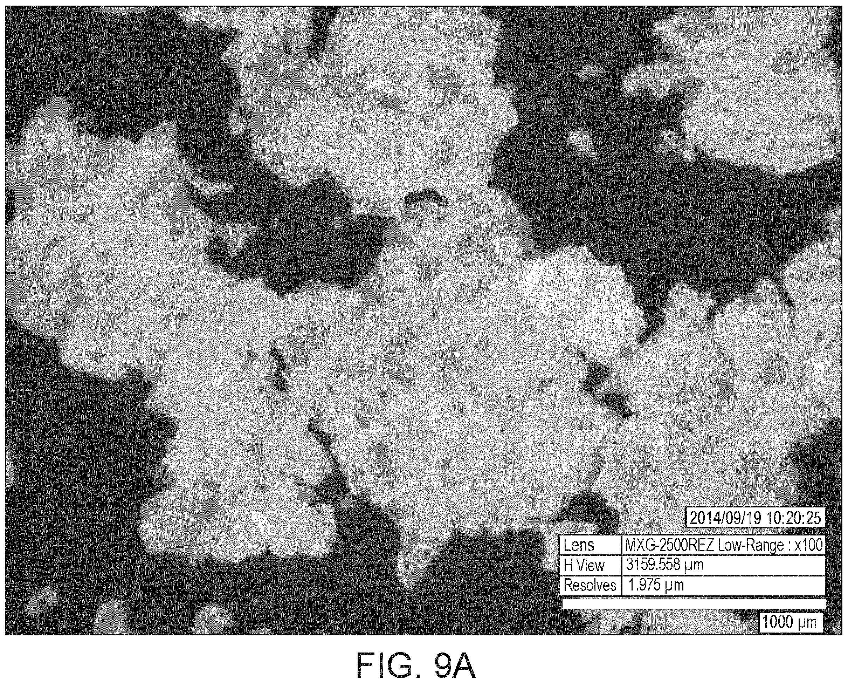

Figure 9A is a light microscopy observation of some milled pellets granulates. As can be seen on the image, the milled pellets are porous. They have a very different morphology compared with direct granulates shown for instance on Figure 10, as it will be shown in the example below.

**Example 2: Direct granulates**

Direct granulates may be prepared using the recipe and conditions C, D and E. The composition C, D and E were extruded directly into granulates with a granulating turbine according to the invention with either 9, 18 and 36 fins, as described in Table 2.1.

**Table 2.1**

| Example | | C | D | E |
|---|---|---|---|---|
| **RECIPE** | Unit | **Direct granulates** | **Direct granulates** | **Direct granulates** |
| Whole wheat flour | % wt | 70 | 70 | 50 |
| Whole corn flour | % wt | 0 | 0 | 20 |
| Oat flour | % wt | 17.45 | 17.45 | 17.45 |
| Whole millet flour | % wt | 5 | 5 | 5 |
| Sugar | % wt | 7 | 7 | 7 |
| Tocopherol | % wt | 0.05 | 0.05 | 0.05 |
| CaCO3 | % wt | 0.5 | 0.5 | 0.5 |
| **EXTRUSION** | | | | |
| Extruder type | | BC 21 | BC 21 | BC21 |
| Product temperature | °C | 145 | 145 | 145 |
| Screw speed | RPM | 400 | 400 | 400 |
| Water in the extruder | % | 21.7 | 21.7 | 21.5 |
| **CUTTING with granulating turbine** | | | | |
| Number of die | | 1 | 1 | 1 |
| Die diameter | mm | 2 | 2 | 2 |
| Total flow rate | Kg/h | 10 | 10 | 10 |
| Flow rate per die | Kg/h | 10 | 10 | 10 |
| Cutting speed | RPM | 13000 | 13000 | 18000 |
| Number of fins of turbine | | 36 | 18 | 9 |
| Vpr | m.s$^{-1}$ | 77.6 | 77.6 | 107.4 |
| Lpr | mm | 0.093 | 0.187 | 0.271 |
| **FIGURE** | | **10, 11C** | **11B** | |

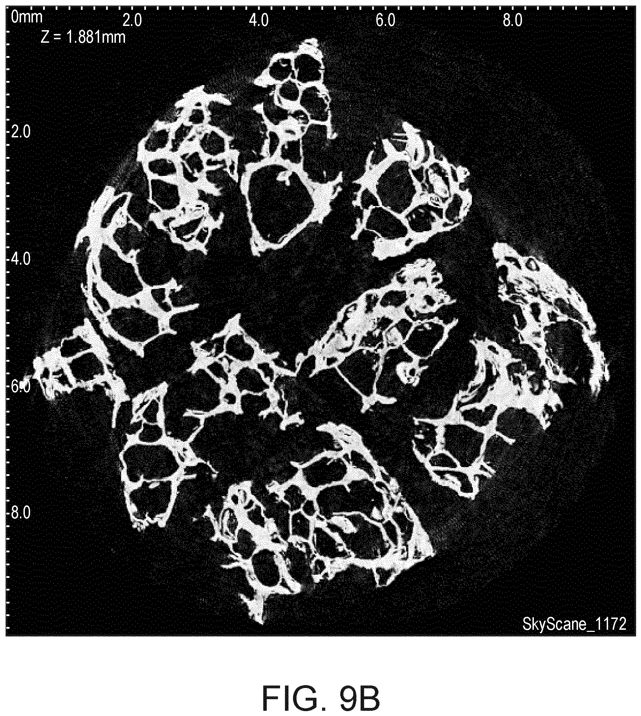

As seen on Figure 10A, the morphology of the granulates produced with the granulating turbine displays a heterogeneous shape, with dendrites in three dimensions (shown by arrows on Figure 10A and 10B). Figure 10B shows the presence of dendrites in the direct granulates, which are not present in the milled pellets (Figure 9B). The walls inside the direct granulates are also clearly thinner than the ones of the milled pellets.

The direct granulates have a porosity of about 58% to 65%, and very thin walls with a mean walls thickness from 22 to 25 microns, as shown in Table 2.2.

The mean wall thickness of direct granulates is thus smaller than that of milled pellets (above 45 microns for milled pellets), as shown in table 2.2, thus confirming the visual observation. For similar ranges of average area diameter, the reconstitution time of direct granulates is from 0.6 to 1.4 minutes. The reconstitution time is thus lower than that of milled pellets (3.4 minutes minimum for milled pellets).

The faster reconstitution of the direct granulates is attributed to their thinner walls and to their unique morphology with irregular and jagged edges, certainly increasing the surface contact with liquid during reconstitution.

The use of the granulating turbine according to the invention in combination with high speed of cutting allows to generate granulates, which reconstitute faster than milled pellets. This is certainly due to their unique structure. This structure can only be generated when the product comes out of the extruder in the plastic state. The expansion of the melt dough at the end of the die is impacted by the turbine and generates very thin walls.

**Table 2.2.**

| Example | Unit | C | D | E |
|---|---|---|---|---|
| Average area diameter | $\mu$m | 1492 | 2107 | 2047 |
| Reconstitution time | min | 0.64 | 0.68 | 1.35 |
| Porosity | % | 58.3 | 64.9 | 64.3 |
| Mean walls thickness | $\mu$m | 25.0 | 23.7 | 21.9 |

Figure 11 shows examples of the variety of direct granulates that can be obtained when decreasing Lpr from 0.38mm (11A), to 0.187 mm (11B), to 0.093 mm (11C) for a fixed Vtur of 77.6 m.s$^{-1}$. Changing Vtur and Lpr allows to generate a wide range of structure, with differences in the reconstitution time, thus leading to a wide range of texture of the porridges. Figure 12 shows how reconstitution time is modified when changing Lpr and Vtur. An increase in Lpr tends to increase reconstitution time whereas an increase in Vtur tends to decrease it. The mouthfeel and the texture perception of the reconstituted porridges is impacted by the reconstitution time, as well as its viscosity.

**Example 3: scaling-up to higher extrusion flow rates**

Direct granulates were prepared by using recipes and conditions F, G, or H, with the extrusion and cutting parameters described in table 3.1.

**Table 3.1.**

| Example | | F | G | H |
|---|---|---|---|---|
| RECIPE | Unit | | | |
| Whole wheat flour | % wt | 70 | 15.6 | 77 |
| Whole corn flour | % wt | 0 | 6.6 | 0 |
| Oat flour | % wt | 22.95 | 9.75 | 11.5 |
| Rice flour | % wt | 0 | 64.05 | 0 |
| Amaranth flour | % wt | 0 | 0 | 10.3 |
| Sugar | % wt | 7 | 2 | 0 |
| Tocopherol | % wt | 0.05 | 0.025 | 0.038 |
| Dipotassium phosphate | % wt | 0 | 0.9 | 0.48 |
| EXTRUSION | | | | |
| Extruder type | | BC 45 | BC 45 | BC 45 |

(continued)

| Example | | F | G | H |
|---|---|---|---|---|
| **RECIPE** | **Unit** | | | |
| Product temperature | °C | 145 | 131 | 142 |
| Screw speed | RPM | 330 | 475 | 400 |
| Water in the extruder | % | 21.5 | 20 | 21.0 |
| **CUTTING with granulating turbine** | | | | |
| Number of die | | 8 | 8 | 24 |
| Die diameter | mm | 2 | 2 | 2 |
| Total flow rate | Kg/h | 80 | 98 | 360 |
| Flow rate per die | Kg/h | 10 | 12.25 | 15 |
| Cutting speed | RPM | 13000 | 12500 | 11400 |
| Number of fins of turbine | | 36 | 36 | 36 |
| Vpr | m.s$^{-1}$ | 77.6 | 74.6 | 68.0 |
| Lpr | mm | 0.078 | 0.099 | 0.133 |

The direct granulates were produced on higher scale extruder (BC 45) with the same range of Vtur and Lpr as those used with a BC 21 extruder, as shown in table 3.1.

The range of reconstitution time obtained is from 0.32 to 0.78 min for the recipes F, G and H. The porosity is between 70 and 83%, and the mean walls thickness is also thin, with about 21 to 25 microns thickness. The upscaling to higher flow rates can thus be performed by keeping the flow rate in each die at about 10 to 15 kg/h, and cutting with the Vpr and Lpr values given in the examples.

| Example | Unit | F | G | H |
|---|---|---|---|---|
| Average area diameter | μm | - | 1313 | 977 |
| Reconstitution time | min | 0.77 | 0.32 | 0.78 |
| Porosity | % | - | 83.0 | 69.7 |
| Mean walls thickness | μm | - | 21.0 | 24.4 |

**Comparative Example 4: Direct Extruded Flakes**

The extruded flakes made as in examples 1 and 2 and Figures 2 and 3 of EP 3073841, or according to examples 1 and 2 and Figures 2, 3 and 4 of EP 3079494, may be used as comparative examples. As shown on the figures of these two patent publications, the obtained extrudates exhibit very regular structures, and they have well-formed flake-shapes.

On the contrary, the present process and granulating turbine allow to obtain a powder like-granulate directly, without the need of a downstream milling.

**Claims**

1. A granulating turbine (5) suitable for a cooperating with a device for manufacturing a granular food product, said device comprising an extruder having a least one extrusion die (2) comprising an extrusion face (3) in which a plurality of extrusion orifices (2a) open, and in which device the granulating turbine (5) may be driven in rotation about an axis (9) perpendicular to the extrusion face (3), said granulating turbine (5) being **characterised in that** it has a front face (6) facing the extrusion face (3), a plurality of fins (7) integral with and extending substantially perpendicularly from the front face (6), each fin (7) having a lead face (7a), a trail face (7b) and a clearance face (7c), the clearance face (7c) facing the extrusion face (3) and the lead face (7a) intersecting the clearance face (7c)

at a cutting edge (7d).

2. The granulating turbine according to claim 1, wherein each fin (7) has a cross-sectional profile, said cross-sectional profile has a base (71) and a tip (72), the base (71) tapering down from the front face (6) of the granulating turbine (5) to the tip (72), and the tip (72) having a substantially constant thickness (E) and extending from the base (71) to the clearance face (7c).

3. The granulating turbine according to claim 1 or 2, wherein each fin (7) has a front-view profile extending between an inner face (7f) and an outer face (7g), the inner face (7f) being closer to the rotation centre (51) of the granulating turbine (5) than the outer face (7g), and the outer face (7g) being radially offset ($\alpha$) from the inner face (7f), or aligned with the inner face (7f).

4. The granulating turbine according to claim 3, wherein the front-view profile of the fins (7) extends along an involute of a circle between the inner face (7f) and the outer face (7g).

5. The granulating turbine according to claim 3 or 4, wherein the inner (7f) and outer (7g) faces of the fins (7) are respectively arranged on an inner and an outer circle, preferably evenly arranged, around the rotation centre (51) of the granulating turbine (5), preferably the outer circle is proximate to the periphery (61) of the front face (6) of the granulating turbine (5).

6. The granulating turbine according to any one of claims 1 to 5, wherein the fins (7) are arranged evenly in a peripheral row.

7. The granulating turbine according to any one of claims 1 to 6, which further comprises through holes (8) arranged between the rotation centre (51) of the granulating turbine (5) and the fins (7), preferably between two consecutive fins (7), preferably on a circle.

8. A device for manufacturing a granular food product, said device comprising an extruder having a least one extrusion die (2) comprising an extrusion face (3) in which a plurality of extrusion orifices (2a) open and a granulating turbine (5) according to any one of claims 1 to 7, wherein the granulating turbine (5) may be driven rotationally about an axis (9) perpendicular to the extrusion face (3) such that, when driven rotationally, the fins (7) pass about the extrusion orifices (2a).

9. A process for manufacturing food-grade granulates which comprises:

mixing a starchy material in an extruder to form a dough;
cooking the dough in the extruder at a temperature comprised between 110°C and 160°C and at a water content comprised between 10% and 30%;
extruding the dough through an extrusion die (2);
cutting the dough into granulates directly at the outlet of the extrusion die (2), at a turbine cutting speed Vtur of between 20 m/s and 120 m/s and at an extrudate length Lpr of between 0.05 mm and 0.5 mm with a rotationally-driven granulating turbine (5) according to any one of claims 1 to 7; and
drying the granulates to a water content below 8%, said food-grade granulates have an average area diameter of between 500 and 4000 $\mu$m, a porosity of between 40% and 90%, a mean wall thickness of between 10 and 50 $\mu$m and a reconstitution time of 0.1 to 1.4 minutes, said parameters determined as described in the description.

10. A process according to claim 9, wherein the diameter of the extrusion holes (2a) of the extrusion die (2) is comprised between 2 mm and 4 mm.

11. Food-grade granulates obtained by the process according to claim 9 or 10, wherein the granulates comprise at least 50% by weight of starch from a starch-based material, and wherein the granulates have a water content below 8%, **characterized in that** the granulates have an average area diameter of between 500 and 4000 um, a porosity of between 40% and 90%, a mean wall thickness of between 10 and 50 um, and a reconstitution time of 0.1 to 1.4 minutes, said parameters determined as described in the description.

12. A dry food composition which comprises granulates according to claim 11, wherein the dry food composition is an infant cereal product, an adult cereal product, a dehydrated sauce, a dehydrated soup, a dehydrated dish, a reconstitutable beverage, or a dehydrated pet food.

**Patentansprüche**

1. Granulierturbine (5), die zum Zusammenwirken mit einer Vorrichtung zur Herstellung eines körnigen Nahrungsmittelprodukts geeignet ist, wobei die Vorrichtung einen Extruder mit mindestens einer Extrusionsdüse (2) mit einer Extrusionsfläche (3) umfasst, in die eine Vielzahl von Extrusionsöffnungen (2a) mündet, und wobei die Granulierturbine (5) in der Vorrichtung um eine Achse (9) senkrecht zur Extrusionsfläche (3) rotierend angetrieben werden kann, wobei die Granulierturbine (5) **dadurch gekennzeichnet ist, dass** sie eine der Extrusionsfläche (3) zugewandte Vorderfläche (6) und eine Vielzahl von Lamellen (7) aufweist, die mit der Vorderfläche (6) fest verbunden sind und im Wesentlichen senkrecht von dieser abstehen, wobei jede Lamelle (7) eine Vorderfläche (7a), eine Hinterfläche (7b) und eine Freifläche (7c) aufweist, wobei die Freifläche (7c) der Extrusionsfläche (3) zugewandt ist und die Vorderfläche (7a) die Freifläche (7c) an einer Schneidkante (7d) schneidet.

2. Granulierturbine nach Anspruch 1, wobei jede Lamelle (7) ein Querschnittsprofil aufweist, wobei das Querschnittsprofil eine Basis (71) und eine Spitze (72) aufweist, wobei die Basis (71) von der Vorderseite (6) der Granulierturbine (5) zur Spitze (72) hin konisch zuläuft, und wobei die Spitze (72) eine im Wesentlichen konstante Dicke (E) aufweist und sich von der Basis (71) bis zur Freifläche (7c) erstreckt.

3. Granulierturbine nach Anspruch 1 oder 2, wobei jede Lamelle (7) ein Frontansichtsprofil aufweist, das sich zwischen einer Innenfläche (7f) und einer Außenfläche (7g) erstreckt, wobei die Innenfläche (7f) näher am Rotationszentrum (51) der Granulierturbine (5) liegt als die Außenfläche (7g), und wobei die Außenfläche (7g) radial von der Innenfläche (7f) versetzt ($\alpha$) oder mit der Innenfläche (7f) ausgerichtet ist.

4. Granulierturbine nach Anspruch 3, wobei das Vorderansichtsprofil der Lamellen (7) entlang einer Evolvente eines Kreises zwischen der Innenfläche (7f) und der Außenfläche (7g) verläuft.

5. Granulierturbine nach Anspruch 3 oder 4, wobei die Innen- (7f) und Außenflächen (7g) der Lamellen (7) jeweils auf einem inneren und einem äußeren Kreis, vorzugsweise gleichmäßig angeordnet, um das Rotationszentrum (51) der Granulierturbine (5) angeordnet sind, wobei sich der äußere Kreis vorzugsweise in der Nähe des Umfangs (61) der Vorderseite (6) der Granulierturbine (5) befindet.

6. Granulierturbine nach einem der Ansprüche 1 bis 5, wobei die Lamellen (7) gleichmäßig in einer Umfangsreihe angeordnet sind.

7. Granulierturbine nach einem der Ansprüche 1 bis 6, die ferner Durchgangslöcher (8) umfasst, die zwischen dem Rotationszentrum (51) der Granulierturbine (5) und den Lamellen (7), vorzugsweise zwischen zwei aufeinanderfolgenden Lamellen (7), vorzugsweise auf einem Kreis, angeordnet sind.

8. Vorrichtung zum Herstellen eines körnigen Nahrungsmittelprodukts, umfassend einen Extruder mit mindestens einer Extrusionsdüse (2), die eine Extrusionsfläche (3) mit einer Vielzahl von Extrusionsöffnungen (2a) umfasst, und eine Granulierturbine (5) nach einem der Ansprüche 1 bis 7, wobei die Granulierturbine (5) um eine senkrecht zur Extrusionsfläche (3) stehende Achse (9) rotierend angetrieben werden kann, so dass die Lamellen (7) beim Rotationsantrieb um die Extrusionsöffnungen (2a) herumlaufen.

9. Verfahren zum Herstellen von Granulat in Lebensmittelqualität, das umfasst:

   Mischen eines stärkehaltigen Materials in einem Extruder, um einen Teig zu bilden;
   Garen des Teigs in dem Extruder bei einer Temperatur von zwischen 110 °C und 160 °C und bei einem Wassergehalt von zwischen 10 % und 30 %;
   Extrudieren des Teigs durch eine Extrusionsdüse (2);
   Schneiden des Teigs in Granulate direkt an dem Auslass der Extrusionsdüse (2), bei einer Turbinenschneidgeschwindigkeit Vtur zwischen 20 m/s und 120 m/s und bei einer Extrudatlänge Lpr zwischen 0,05 mm und 0,5 mm mit einer drehangetriebenen Granulierturbine (5) nach einem der Ansprüche 1 bis 7; und
   Trocknen der Granulate auf einen Wassergehalt von unter 8 %, wobei die Granulate in Lebensmittelqualität einen durchschnittlichen Flächendurchmesser zwischen 500 und 4000 $\mu$m, eine Porosität zwischen 40 % und 90 %, eine mittlere Wandstärke zwischen 10 und 50 $\mu$m und eine Rekonstitutionszeit von 0,1 bis 1,4 Minuten aufweisen, wobei die Parameter wie in der Beschreibung angegeben bestimmt werden.

10. Verfahren nach Anspruch 9, wobei der Durchmesser der Extrusionslöcher (2a) der Extrusionsdüse (2) zwischen 2 mm und 4 mm beträgt.

**11.** Durch das Verfahren nach Anspruch 9 oder 10 erhaltene Granulate in Lebensmittelqualität, wobei die Granulate zu mindestens 50 Gew.-% Stärke aus einem stärkebasierten Material umfassen, und wobei die Granulate einen Wassergehalt von unter 8 % aufweisen, **dadurch gekennzeichnet, dass** die Granulate einen durchschnittlichen Flächendurchmesser zwischen 500 und 4000 μm, eine Porosität zwischen 40 % und 90 %, eine mittlere Wandstärke zwischen 10 und 50 μm, und eine Rekonstitutionszeit von 0,1 bis 1,4 Minuten aufweisen, wobei die Parameter wie in der Beschreibung angegeben bestimmt werden.

**12.** Trockennahrungsmittelzusammensetzung, die Granulate nach Anspruch 11 umfasst, wobei die Trockennahrungsmittelzusammensetzung ein Getreideprodukt für Säuglinge, ein Getreideprodukt für Erwachsene, eine dehydrierte Soße, eine dehydrierte Suppe, ein dehydriertes Gericht, ein rekonstituierbares Getränk oder ein dehydriertes Heimtiernahrungsmittel ist.

**Revendications**

**1.** Turbine de granulation (5) convenant à une coopération avec un dispositif de fabrication d'un produit alimentaire granulaire, ledit dispositif comprenant une extrudeuse ayant au moins une filière d'extrusion (2) comprenant une face d'extrusion (3) dans laquelle s'ouvre une pluralité d'orifices d'extrusion (2a), et dans lequel dispositif la turbine de granulation (5) peut être entraînée en rotation autour d'un axe (9) perpendiculaire à la face d'extrusion (3), ladite turbine de granulation (5) étant **caractérisée en ce qu'**elle présente une face avant (6) orientée vers la face d'extrusion (3), une pluralité d'ailettes (7) faisant corps avec la face avant (6) et s'étendant sensiblement perpendiculairement à partir de celle-ci, chaque ailette (7) présentant une face avant (7a), une face arrière (7b) et une face de dégagement (7c), la face de dégagement (7c) étant orientée vers la face d'extrusion (3) et la face avant (7a) croisant la face de dégagement (7c) au niveau d'une arête de coupe (7d).

**2.** Turbine de granulation selon la revendication 1, dans laquelle chaque ailette (7) a un profil transversal, ledit profil transversal a une base (71) et une pointe (72), la base (71) s'amincissant depuis la face avant (6) de la turbine de granulation (5) jusqu'à la pointe (72), et la pointe (72) ayant une épaisseur (E) sensiblement constante et s'étendant de la base (71) à la face de dégagement (7c).

**3.** Turbine de granulation selon la revendication 1 ou 2, dans laquelle chaque ailette (7) a un profil de vue avant s'étendant entre une face interne (7f) et une face externe (7g), la face interne (7f) étant plus proche du centre de rotation (51) de la turbine de granulation (5) que la face externe (7g), et la face externe (7g) étant décalée radialement (α) de la face interne (7f), ou alignée sur la face interne (7f).

**4.** Turbine de granulation selon la revendication 3, dans laquelle le profil de vue avant des ailettes (7) s'étend le long d'une développante d'un cercle entre la face interne (7f) et la face externe (7g).

**5.** Turbine de granulation selon la revendication 3 ou 4, dans laquelle les faces interne (7f) et externe (7g) des ailettes (7) sont respectivement disposées sur un cercle interne et externe, de préférence disposées régulièrement, autour du centre de rotation (51) de la turbine de granulation (5), de préférence le cercle externe est proche de la périphérie (61) de la face avant (6) de la turbine de granulation (5).

**6.** Turbine de granulation selon l'une quelconque des revendications 1 à 5, dans laquelle les ailettes (7) sont disposées régulièrement dans une rangée périphérique.

**7.** Turbine de granulation selon l'une quelconque des revendications 1 à 6, qui comprend en outre des trous traversants (8) disposés entre le centre de rotation (51) de la turbine de granulation (5) et les ailettes (7), de préférence entre deux ailettes consécutives (7), de préférence sur un cercle.

**8.** Dispositif pour la fabrication d'un produit alimentaire granulaire, ledit dispositif comprenant une extrudeuse ayant au moins une filière d'extrusion (2) comprenant une face d'extrusion (3) dans laquelle s'ouvre une pluralité d'orifices d'extrusion (2a) et une turbine de granulation (5) selon l'une quelconque des revendications 1 à 7, dans laquelle la turbine de granulation (5) peut être entraînée en rotation autour d'un axe (9) perpendiculaire à la face d'extrusion (3) de telle sorte que, lorsqu'elle est entraînée en rotation, les ailettes (7) passent autour des orifices d'extrusion (2a).

**9.** Procédé de fabrication de granulés de qualité alimentaire qui comprend :

le mélange d'une matière amylacée dans une extrudeuse pour former une pâte ;

la cuisson de la pâte dans l'extrudeuse à une température comprise entre 110 °C et 160 °C et à une teneur en eau comprise entre 10 % et 30 % ;

l'extrusion de la pâte par une filière d'extrusion (2) ;

la découpe de la pâte en granulés directement à la sortie de la filière d'extrusion (2), à une vitesse de découpe de turbine Vtur comprise entre 20 m/s et 120 m/s et à une longueur d'extrudat Lpr comprise entre 0,05 mm et 0,5 mm avec une turbine de granulation (5) entraînée en rotation selon l'une quelconque des revendications 1 à 7 ; et

le séchage des granulés à une teneur en eau inférieure à 8 %, lesdits granulés de qualité alimentaire ont un diamètre moyen compris entre 500 et 4 000 $\mu$m, une porosité comprise entre 40 % et 90 %, une épaisseur moyenne de paroi comprise entre 10 et 50 $\mu$m et un temps de reconstitution compris de 0,1 à 1,4 minute, lesdits paramètres étant déterminés comme décrit dans la description.

**10.** Procédé selon la revendication 9, dans lequel le diamètre des trous d'extrusion (2a) de la filière d'extrusion (2) est compris entre 2 mm et 4 mm.

**11.** Granulés de qualité alimentaire obtenus par le procédé selon la revendication 9 ou 10, dans lesquels les granulés comprennent au moins 50 % en poids d'amidon provenant d'une matière amylacée, et dans lesquels les granulés ont une teneur en eau inférieure à 8 %, **caractérisés en ce que** les granulés ont un diamètre moyen compris entre 500 et 4 000 $\mu$m, une porosité comprise entre 40 % et 90 %, une épaisseur moyenne de paroi comprise entre 10 et 50 $\mu$m, et un temps de reconstitution de 0,1 à 1,4 minute, lesdits paramètres étant déterminés comme décrit dans la description.

**12.** Composition alimentaire sèche qui comprend des granulés selon la revendication 11, dans laquelle la composition alimentaire sèche est un produit de céréale pour nourrisson, un produit de céréale pour adulte, une sauce déshydratée, une soupe déshydratée, un plat déshydraté, une boisson pouvant être reconstituée ou un aliment déshydraté pour animal de compagnie.

FIG. 1 (prior art)

## FIG. 2

## FIG. 3

FIG. 4

FIG. 5

FIG. 6

FIG. 7

FIG. 8

2014/09/19 10:20:25

| Lens | MXG-2500REZ Low-Range：x100 |
| H View | 3159.558 μm |
| Resolves | 1.975 μm |

1000 μm

FIG. 9A

FIG. 9B

FIG. 10A

FIG. 10B

FIG. 11A

FIG. 11B

FIG. 11C

FIG. 12

## REFERENCES CITED IN THE DESCRIPTION

**Patent documents cited in the description**

- US 7524178 B
- US 3808962 A
- US 4044159 A
- EP 3079494 A
- EP 3073841 A